# EUROPÄISCHE PATENTANMELDUNG

(11) **EP 1 992 885 A2**
(43) Veröffentlichungstag der Anmeldung: **19.11.2008**
(21) Anmeldenummer: 08008992.3
(22) Anmeldetag: 15.05.2008
(51) Int. Cl.: F24F 13/02

(54) **Lüftungsinstallationselement**

(30) Priorität: 15.05.2007 DE 102007023004
(71) Anmelder: Riegelhof & Gärtner oHG, 64331 Weiterstadt-Gräfenhausen (DE)
(72) Erfinder: Jäger, Wolfgang, 63303 Dreieich (DE)
(74) Vertreter: Wolff, Felix

(57) **Zusammenfassung**

Die Erfindung betrifft Lüftungsinstallationselemente mit einem umschlossenen Innenraum, welcher über eine erste Anschlussöffnung und über eine zweite Anschlussöffnung mit weiteren Lüftungsinstallationselementen oder mit sonstigen Elementen einer Lüftung verbindbar ist.

## Beschreibung

Die Erfindung betrifft Lüftungsinstallationselemente mit einem umschlossenen Innenraum, welcher über eine erste Anschlussöffnung und über eine zweite Anschlussöffnung mit weiteren Lüftungsinstallationselementen oder mit sonstigen Elementen einer Lüftung verbindbar ist, sowie eine Lüftung.

Solche Lüftungsinstallationselemente dienen zur Herstellung einer Be- oder Entlüftung, insbesondere einer Zimmerentlüftung, beispielsweise von Dunstabzugshauben zu einer Wanddurchführung. Zu den Elementen einer Lüftung gehören beispielsweise Rohrstücke, Umlenkstücke, Verbinder, Übergangsstücke rund/flach und Rohrbögen, wobei diese Elemente teilweise in einem Bauteil kombiniert sein können. Derartige Elemente sind beispielsweise aus dem deutschen Gebrauchsmuster DE 87 00 090 U1 bekannt. Im Fall einer Küchenentlüftung werden die Elemente im Allgemeinen von der Dunstabzugshaube auf der Oberseite der Küchenmöbel bis zum Wanddurchbruch, in dem ein Mauerkasten montiert ist, geführt. Ein Nachteil der bekannten Elemente besteht darin, dass ein Höhen- oder Seitenversatz oder ein Bogen, beispielsweise zur Umgehung eines Hindernisses, durch rechtwinklige Umlenkstücke erfolgt. Diese erhöhen den Rohrleitungswiderstand stark, wobei der Versatz häufig deutlich höher ist, als zur Umgehung eines Hindernisses notwendig. Weiterhin ist baulich aus Platzmangel im Bereich von Entlüftungen, beispielsweise zwischen einem Möbel und der Wand oder Decke, ein solcher Versatz gegebenenfalls nicht realisierbar. Letztlich wirken derartige Konstruktionen im Küchenbereich unansehnlich.

Eine Aufgabe der Erfindung besteht deshalb darin, ein Lüftungsinstallationselement zu schaffen, bei welchem die Nachteile des Standes der Technik vermieden werden.

Diese Aufgabe wird gelöst durch ein Lüftungsinstallationselement mit einem umschlossenen Innenraum, welcher über eine erste Anschlussöffnung und über eine zweite Anschlussöffnung mit weiteren Lüftungsinstallationselementen oder mit sonstigen Elementen einer Lüftung verbindbar ist, wobei die erste Anschlussöffnung eine erste Ebene definiert, welche mit einer durch die zweite Anschlussöffnung definierten, zweite Ebene einen Ablenkwinkel einschließt, wobei der Ablenkwinkel ein spitzer Winkel ist. Die erste und die zweite Ebene, im Sinne der Erfindung sind im Wesentlichen senkrecht zu denjenigen Richtungen ausgerichtet, in welchen ein Luftstrom die jeweilige erste und zweite Anschlussöffnung durchströmt. Mit dem erfindungsgemäßen Lüftungsinstallationselement erfolgt also eine Umlenkung des Luftstroms gegenüber einer Geraden um den Ablenkwinkel. Der spitze Winkel, im Sinne der Erfindung, ist größer als 0° und kleiner als 90°. Die Schnittgerade der ersten und zweiten Ebene bildet die Achse, um welche die Umlenkung erfolgt. Mit einer zu dieser Schnittgeraden senkrechte Ebene schneiden sich die erste Ebene und die zweite Ebene in zwei Geraden. Der Winkel zwischen diesen Geraden definiert den Winkel zwischen der ersten Ebene und der zweiten Ebene.

Die Rohrleitungswiderstand erhöht sich vorteilhafterweise bei einem erfindungsgemäßen Lüftungsinstallationselement weniger stark als bei einem rechtwinkligen Umlenkstück. Dabei ist das erfindungsgemäße Lüftungsinstallationselement, bzw. eine Mehrzahl derselben, bei vorteilhaft geringerem Platzbedarf ebenso geeignet für die Herstellung eines Bogens, eines Versatzes oder einer Umgehung.

Gemäß einer bevorzugten Ausführungsform der Erfindung ist vorgesehen, dass ein ganzzahliges Vielfaches des Ablenkwinkels einen rechten Winkel bildet. Durch das Verbinden mehrerer, erfindungsgemäßer Lüftungsinstallationselemente in gleicher Umlenkungsrichtung ist somit vorteilhaft ein rechtwinkliges Umlenkstück herstellbar. Die für die Herstellung einer Lüftung benötigte Vielfalt an unterschiedlichen Elementen wird daher nicht erhöht. Das ganzzahlige Vielfache ist in einem sinnvollen Rahmen von zwei bis etwa fünfzehn wählbar, besonders bevorzugt zwei, drei, vier, sechs oder acht, woraus sich Ablenkwinkel von 11,25°, 15°, 22,5°, 30° und 45° ergeben.

Gemäß einer weiteren bevorzugten Ausführungsform der Erfindung ist vorgesehen, dass die erste Anschlussöffnung und/oder die zweite Anschlussöffnung einen im Wesentlichen rechteckigen Querschnitt aufweist. Lüftungselemente mit rechteckigem Querschnitt werden in der Regel als Flachkanal bezeichnet. Sie weisen beispielsweise eine vergleichbare Querschnittsfläche auf, wie Rohre mit Kreisquerschnitt. Dunstabzugshauben weisen beispielsweise Rohre mit 150 Millimeter Durchmesser auf. Der entsprechende Flachkanal weist dann Kantenlängen von beispielsweise etwa 162 Millimeter mal 110 Millimeter auf, was etwa dergleichen Querschnittsfläche entspricht. Vorzugsweise ist der Innenraum des erfindungsgemäßen Lüftungsinstallationselements von einer im Querschnitt im Wesentlichen rechteckigen Wandung umschlossen. Das Lüftungsinstallationselement dient so, bei beidseitig rechteckigen Anschlussöffnungen als Umlenkstück zwischen derartigen Elementen der Lüftung mit im Wesentlichen rechteckigem Querschnitt, insbesondere Flachkanälen.

Gemäß einer ersten, besonders bevorzugten Ausführungsform eines solchen Umlenkstücks für Flachkanäle sind die Breitseiten der Wandung um den Ablenkwinkel gegenüber der Geraden geknickt und/oder gebogen. Gemäß einer zweiten, besonders bevorzugten Ausführungsform sind die Schmalseiten der Wandung um den Ablenkwinkel gegenüber der Geraden geknickt und/oder gebogen. Mathematisch ausgedrückt, verläuft die Schnittgerade der ersten Ebene und der zweiten Ebene entweder parallel zu der Breitseite oder parallel zu der Schmalseite des Flachkanals. Mit den beschriebenen Ausführungsformen lassen sich vorteilhaft Umlenkungen in verschiedene Raumrichtungen realisieren.

Gemäß einer weiteren, bevorzugten Ausführungsform der Erfindung ist vorgesehen, dass die erste Anschlussöffnung und/oder die zweite Anschlussöffnung einen im Wesentlichen kreisförmigen Querschnitt aufweisen. Der Fachmann erkennt, dass bei mindestens einer Anschlussöffnung mit kreisförmigem Querschnitt die Umlenkung um den vorgegebenen Ablenkwinkel vorteilhafterweise in eine beliebige Richtung erfolgen kann, wenn die Anschlussöffnung gegenüber ihrem Gegenstück verdrehbar ist. Durch eine Kombination von zwei solchen Lüftungsinstallationselementen, welche mit ihren jeweiligen Anschlussöffnungen mit kreisförmigem Querschnitt verbunden sind, werden vorteilhaft zwei voneinander unabhängige Umlenkungen ermöglicht. Durch Verdrehen der Lüftungsinstallationselemente gegeneinander lässt sich so vorteilhaft eine Umlenkung in beliebiger Raumrichtung erreichen. Die maximal mögliche Umlenkung ist durch die Summe der Ablenkwinkel der zwei Lüftungsinstallationselemente gegeben. Besonders bevorzugt beträgt der Ablenkwinkel der Umlenkung eines Lüftungsinstallationselements bei dieser Ausführungsform im Wesentlichen 45°.

Gemäß einer weiteren, bevorzugten Ausführungsform der Erfindung ist vorgesehen, dass das Lüftungsinstallationselement als Übergangselement von einem im Wesentlichen kreisförmigen Querschnitt auf einen im Wesentlichen rechteckigen Querschnitt eines Lüftungsinstallationselements oder sonstigen Elements einer Lüftung dient.

Besonders bevorzugt ist vorgesehen, dass die erste Anschlussöffnung einen ovalen und insbesondere kreisrunden Querschnitt und die zweite Anschlussöffnung einen rechteckigen Querschnitt aufweist, so dass besonders vorteilhaft das Installationselement als Adapter von einem kreisrunden Querschnitt auf einen rechteckigen Querschnitt fungiert.

Besonders bevorzugt ist vorgesehen, dass die erste Anschlussöffnung als ein im Wesentlichen kreisrunder und insbesondere ringförmiger Zylinder ausgebildet ist. Besonders vorteilhaft vorgesehen, dass ein weiteres Lüftungsinstallationselement, ein Rohr oder ein Schlauch auf den zur Befestigung auf den Zylinder aufgeschoben wird. Besonders bevorzugt ist vorgesehen, dass ein Randbereich des Zylinders, insbesondere das dem zweiten Anschlussstück am nächsten gelegene Randbereich, über das zweite Anschlussstück, insbesondere senkrecht zum zweiten Anschlussstück, hervorsteht, so dass besonders vorteilhaft ein Aufstecken eines vergleichsweise dickwandigen weiteren Lüftungsinstallationselements, Rohres oder Schlauches auf den Zylinder nicht durch das zweite Anschlussstück verhindert wird.

Besonders bevorzugt ist vorgesehen, dass die erste Anschlussöffnung, insbesondere der Zylinder, mit der zweiten Anschlussöffnung über eine rohrförmige Wandung mit im Wesentlichen kreisförmigen und/oder rechteckigen Querschnitt verbunden ist, wobei bevorzugt die rohrförmige Wandung im Bereich der ersten Anschlussöffnung einen kreisrunden Querschnitt und im Bereich der zweiten Anschlussöffnung einen rechteckigen Querschnitt aufweist. Besonders vorteilhaft ist somit eine Verbindung eines rechteckigen zweiten Anschlussstücks mit einem kreisrunden ersten Anschlussstück derart möglich, dass die Wandung insbesondere gleichmäßig von dem kreisrunden Querschnitt zum rechteckigen Querschnitt übergeht. Dies ist insbesondere im Hinblick auf einem möglichst geringen Strömungswiderstand des Installationselements vorteilhaft.

Besonders bevorzugt ist die erste Anschlussöffnung zur Aufnahme eines, insbesondere flexibel ausgebildeten, Schlauches vorgesehen. Besonders vorteilhaft wird durch die Flexibilität des Schlauches ein besonders bauraumkompakter Anschluss an das Installationselement ermöglicht.

Besonders bevorzugt ist vorgesehen, dass auf die erste Anschlussöffnung ein weiteres Lüftungsinstallationselement, ein insbesondere flexibel ausgebildeter, Schlauch oder ein Rohr aufgesteckt ist, so dass in besonders einfacher Weise eine Montage beispielsweise weiterer Anschlussstücke ermöglicht wird.

Besonders bevorzugt ist vorgesehen, dass die zweite Anschlussöffnung zur Aufnahme eines weiteren Lüftungsinstallationselements, eines Schlauches oder eines Rohres ausgebildet ist, so dass in besonders einfacher Weise eine Montage beispielsweise weiterer Anschlussstücke ermöglicht wird.

Besonders bevorzugt ist vorgesehen, dass die Schmalseiten der Wandung um einen ersten Krümmungsradius und/oder die Breitseiten der Wandung um einen zweiten Krümmungsradius um eine Hauptströmungsrichtung durch das Installationselement gekrümmt ausgebildet sind, wobei bevorzugt der erste Krümmungsradius ungleich dem zweiten Krümmungsradius ist. Besonders vorteilhaft ist somit eine Minimierung des Strömungswiderstandes durch das Anschlusselement realisierbar.

Ein weiterer Gegenstand der Erfindung ist eine Lüftung, beispielsweise eine Be- oder Entlüftung aufweisend eine Mehrzahl von Elementen sowie mindestens ein erfindungsgemäßes Lüftungsinstallationselement, wobei das Lüftungsinstallationselement als Umlenkstück oder als Übergangsstück oder als Teil eines Umlenkstücks oder Übergangsstücks dient. Durch das erfindungsgemäße Lüftungsinstallationselement ist die Lüftung variabler und einfacher, mit geringerem Platzbedarf montierbar.

Gemäß einer bevorzugten Ausführungsform der Erfindung ist vorgesehen, dass eine Mehrzahl der Lüftungsinstallationselemente einen Bogen, einen Höhenversatz, eine Versperrung, einen Seitenversatz oder einen Teilwinkel bilden.

Nachfolgend wird die Erfindung anhand von Ausführungsbeispielen gemäß den beiliegenden Zeichnungen erläutert. Die Ausführungen sind lediglich beispielhaft und schränken den allgemeinen Erfindungsgedanken nicht ein.

Es zeigen
Figuren 1 a und 1 b eine erste Ausführungsform eines Lüftungsinstallationselements gemäß der Erfindung in zwei schematischen Ansichten,
Figuren 2a und 2b einen Teil einer erfindungsgemäßen Lüftung mit zwei Lüftungsinstallationselementen gemäß Figuren 1 a und 1 b in zwei schematischen Ansichten,
Figuren 3a und 3b einen Teil einer erfindungsgemäßen Lüftung mit vier Lüftungsinstallationselementen gemäß Figuren 1 a und 1 b in zwei schematischen Ansichten,
Figur 4 einen Teil einer erfindungsgemäßen Lüftung mit acht Lüftungsinstallationselementen gemäß Figuren 1 a und 1 b in einer schematischen Ansicht,
Figuren 5a und 5b eine zweite Ausführungsform eines Lüftungsinstallationselements gemäß der Erfindung in zwei schematischen Ansichten,
Figuren 6a und 6b einen Teil einer erfindungsgemäßen Lüftung mit zwei Lüftungsinstallationselementen gemäß Figuren 5a und 5b in zwei schematischen Ansichten,
Figuren 7a und 7b einen Teil einer erfindungsgemäßen Lüftung mit vier Lüftungsinstallationselementen gemäß Figuren 5a und 5b in zwei schematischen Ansichten,
Figuren 8a, 8b und 8c eine dritte Ausführungsform eines Lüftungsinstallationselements gemäß der Erfindung in drei Ansichten,
Figuren 9a und 9b eine vierte Ausführungsform eines Lüftungsinstallationselements gemäß der Erfindung in zwei schematischen Ansichten,
Figuren 10a und 10b einen Teil einer erfindungsgemäßen Lüftung mit zwei Lüftungsinstallationselementen gemäß Figuren 9a und 9b in zwei schematischen Ansichten,
Figuren 11 a und 11 b einen Teil einer erfindungsgemäßen Lüftung mit einer Kombination der Lüftungsinstallationselemente gemäß Figuren 1 a und 1 b, sowie 5a und 5b, in zwei schematischen Ansichten,
Figuren 12a und 12b einen Teil einer erfindungsgemäßen Lüftung mit einer Kombination der Lüftungsinstallationselemente gemäß Figuren 8a und 8b mit Lüftungsinstallationselemente gemäß Figuren 9a und 9b, in zwei schematischen Ansichten,
Figuren 13a und 13b die Kombination gemäß Figuren 12a und 12b mit einem weiteren Lüftungsinstallationselement gemäß Figuren 9a und 9b, in zwei schematischen Ansichten.

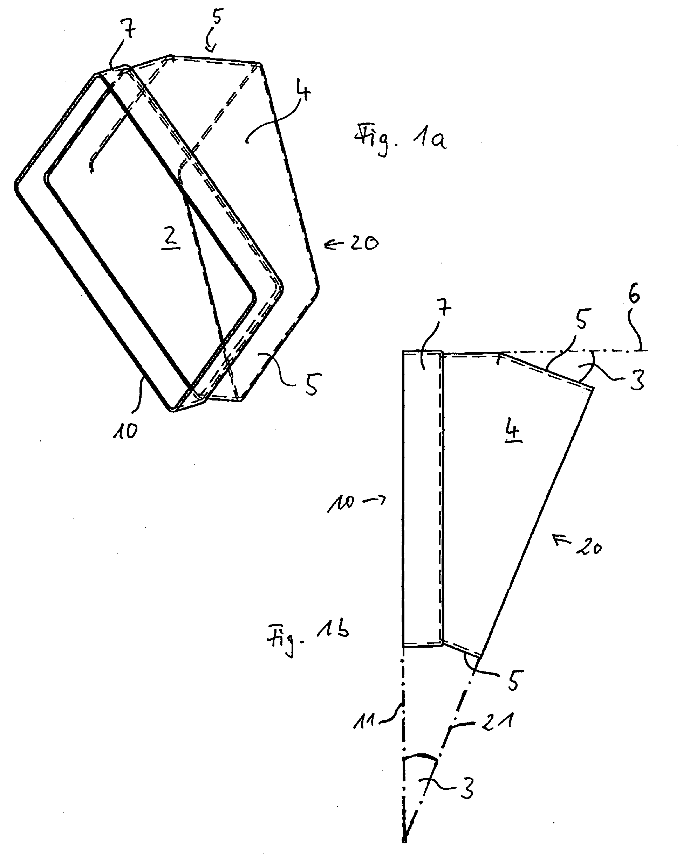

In den Figuren 1 a und 1 b ist jeweils ein einzelnes Lüftungsinstallationselement gemäß der Erfindung dargestellt, in Figur 1a in einer schematischen, perspektivischen Ansicht und in der Figur 1b in einer schematischen Seitenansicht. Das Lüftungsinstallationselement weist einen umschlossenen Innenraum 2 auf, durch welchen Luft, insbesondere Abluft strömt. Der Innenraum 2 ist in den folgenden Figuren nicht explizit ausgeführt. Der Innenraum 2 ist hier von einer im Querschnitt im Wesentlichen rechteckigen Wandung umschlossen. Diese weist zwei sich gegenüberliegende Breitseiten 4, sowie zwei, sich ebenfalls gegenüberliegende Schmalseiten 5 auf. Über eine erste Anschlussöffnung 10, sowie eine zweite Anschlussöffnung 20 ist das erfindungsgemäße Lüftungsinstallationselement mit weiteren, nicht dargestellten Lüftungsinstallationselement oder sonstigen Elementen einer Lüftung verbindbar. Dazu weist die erste Anschlussöffnung 10 hier beispielsweise einen Flanschbereich 7 auf, welcher zur Aufnahme einer entsprechend rechteckigen Wandung geeignet ist. Die zweite Anschlussöffnung 20 ist dagegen zum Einstecken in einen entsprechenden Flansch an einem anzuschließenden Lüftungsinstallationselement oder sonstigen Element einer Lüftung vorgesehen.

Das Lüftungsinstallationselement lenkt einen Luftstrom gegenüber einer geraden Strömungsrichtung, welche parallel zu der mit 6 bezeichneten Geraden verlaufen würde, um. Die Umlenkung erfolgt um einen Ablenkwinkel 3 gegenüber der Geraden, wobei der Ablenkwinkel 3 ein spitzer Winkel, also größer als 0° und kleiner als 90° ist. Der Ablenkwinkel 3 ist der durch eine erste Ebene 11 und eine zweite Ebene 21 eingeschlossen, welche durch die Ausrichtung der ersten und zweiten Anschlussöffnungen 10, 20 gegeben sind. In der Darstellung liegen die Ränder der Anschlussöffnungen 10, 20 in den entsprechenden Ebenen 11, 21. Dies ist jedoch nicht notwendigerweise der Fall. Die erste und zweite Ebene 11, 21 sind jeweils im Wesentlichen senkrecht zu dem sie durchströmenden Luftstrom ausgerichtet. Die Ebenen 11, 21 schneiden sich in der Geraden 9, welche in dieser Darstellung senkrecht zu der Zeichenebene ausgerichtet ist und die Achse bildet, um welche die Umlenkung der Luftströmung erfolgt.

Die Schmalseiten 5 der Wandung weisen einen sichtbaren Knick um den Ablenkwinkel 3 auf. Die Schmalseiten 5 können jedoch ebenso abgerundet oder teilweise abgerundet sein.

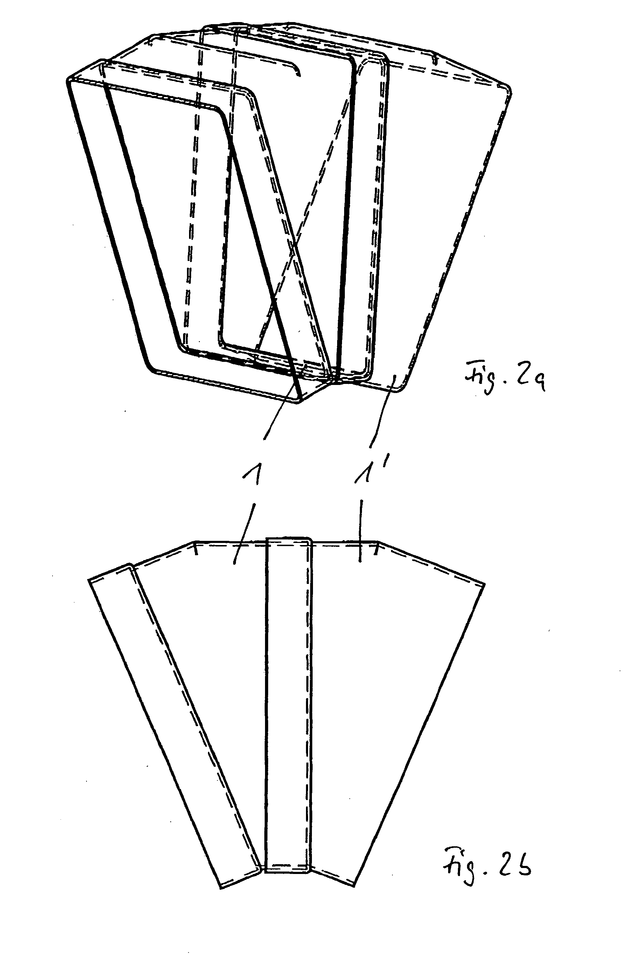

In den Figuren 2a und 2b sind zwei Lüftungsinstallationselemente 1, 1' gemäß Figuren 1 a und 1 b dargestellt, welche zu einem Teil einer erfindungsgemäßen Lüftung zusammengefügt sind.

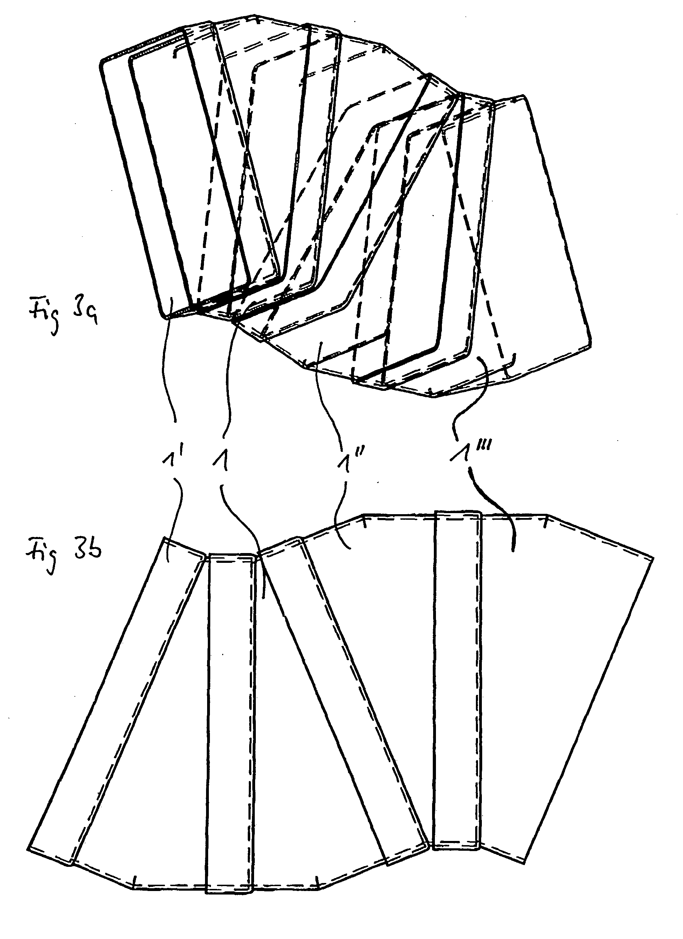

In den Figuren 3a und 3b sind vier Lüftungsinstallationselemente 1, 1', 1 ", 1'" gemäß den Figuren 1 a und 1 b dargestellt, welche zu einem Teil einer erfindungsgemäßen Lüftung zusammengefügt sind. Da die zwei Lüftungsinstallationselemente 1, 1' den Luftstrom in einer Richtung umleiten und die zwei anderen Lüftungsinstallationselemente 1 ", 1"' den Luftstrom in die entgegengesetzte Richtung umleiten, erfolgt durch den dargestellten Teil der Lüftung ein seitlicher Versatz ohne Richtungsänderung.

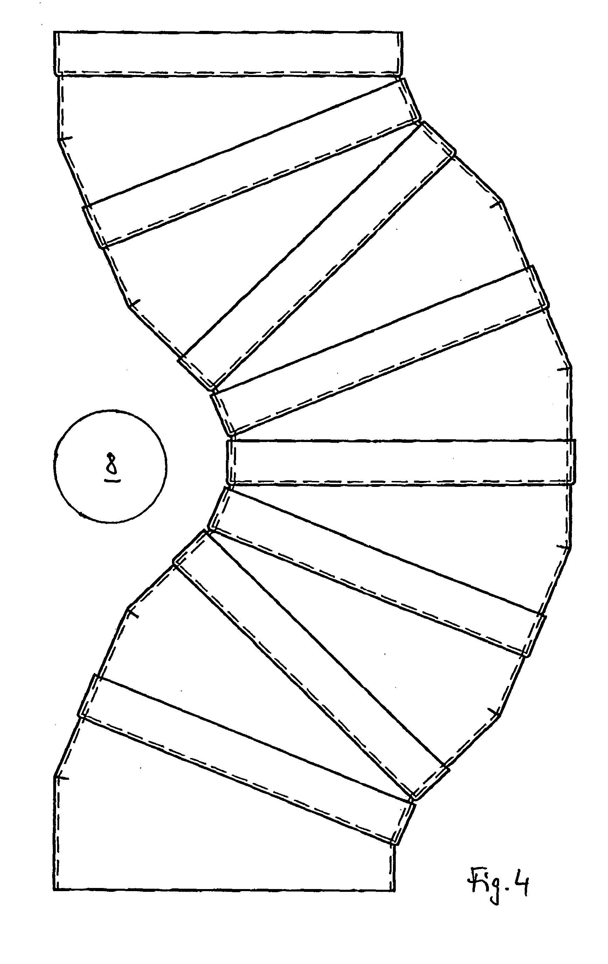

In der Figur 4 ist ein weiterer Teil einer erfindungsgemäßen Lüftung mit acht Lüftungsinstallationselementen (ohne Bezugszeichen) gemäß Figuren 1a und 1b dargestellt, wobei hier der Luftstrom um ein Hindernis 8, beispielsweise eine Installations- oder Elektroleitung, bei geringem Platzbedarf herumgeführt wird.

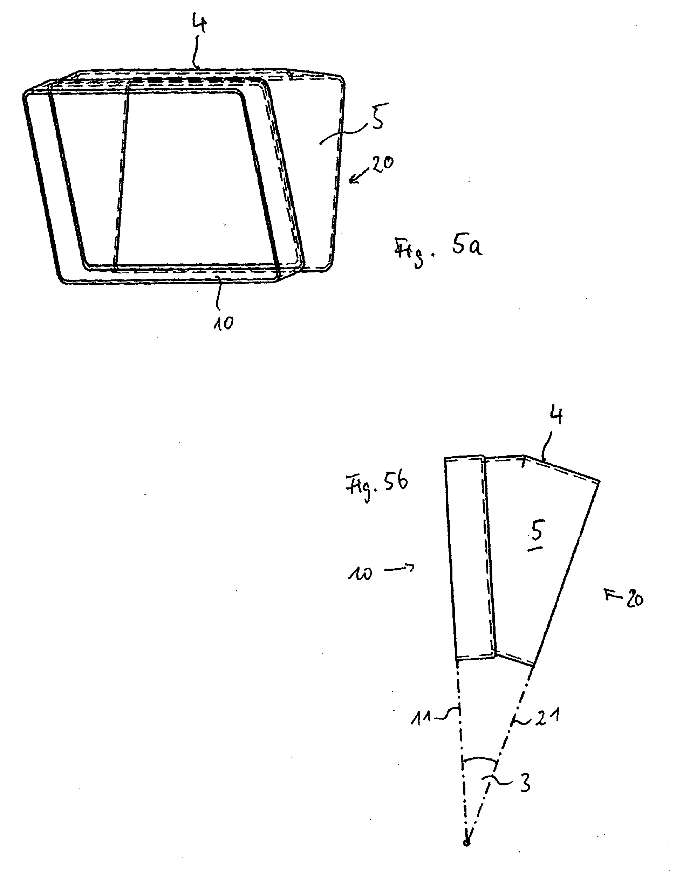

In den Figuren 5a und 5b ist eine zweite Ausführungsform des erfindungsgemäßen Lüftungsinstallationselements 1 dargestellt. Im Unterschied zu dem Lüftungsinstallationselement gemäß Figuren 1 a und 1 b, sind hier die Schmalseiten 5 eben und die Längsseiten 4 um den Ablenkwinkel 3 geknickt. Die Längsseiten könnten ebenso um den Ablenkwinkel 3 gebogen sein. Die Umlenkung erfolgt hier also in einer anderen Raumrichtung.

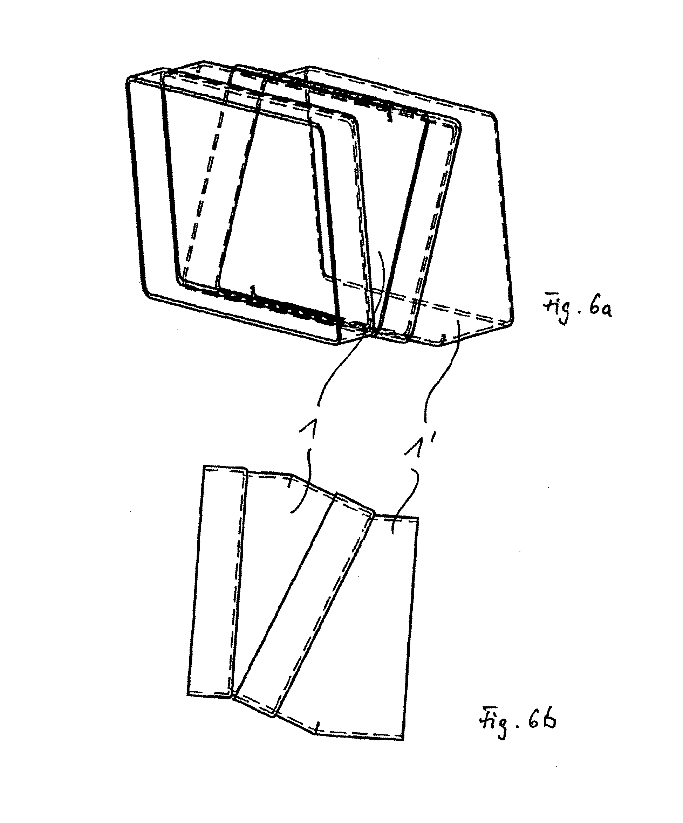

In den Figuren 6a und 6b sind zwei Lüftungsinstallationselemente 1, 1' gemäß Figuren 5a und 5b dargestellt, welche zu einem Teil einer erfindungsgemäßen Lüftung zusammengefügt sind.

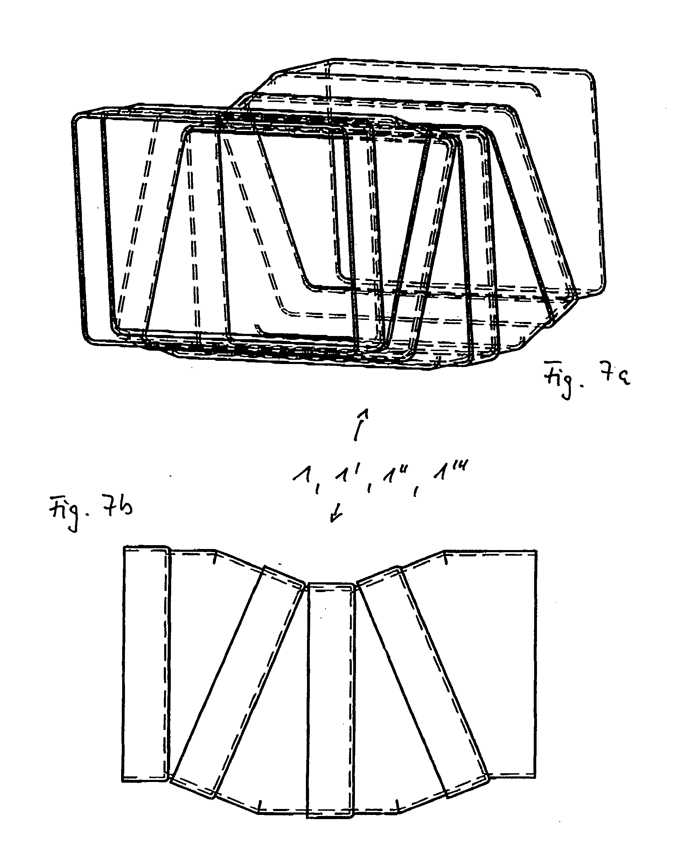

In den Figuren 7a und 7b sind vier Lüftungsinstallationselemente 1, 1', 1", 1''' gemäß den Figuren 5a und 5b dargestellt, welche zu einem Teil einer erfindungsgemäßen Lüftung zusammengefügt sind. Da die zwei Lüftungsinstallationselemente 1, 1' den Luftstrom in einer Richtung umleiten und die zwei anderen Lüftungsinstallationselemente 1 ", 1''' den Luftstrom in die entgegengesetzte Richtung umleiten, erfolgt durch den dargestellten Teil der Lüftung ein Höhenversatz ohne Richtungsänderung.

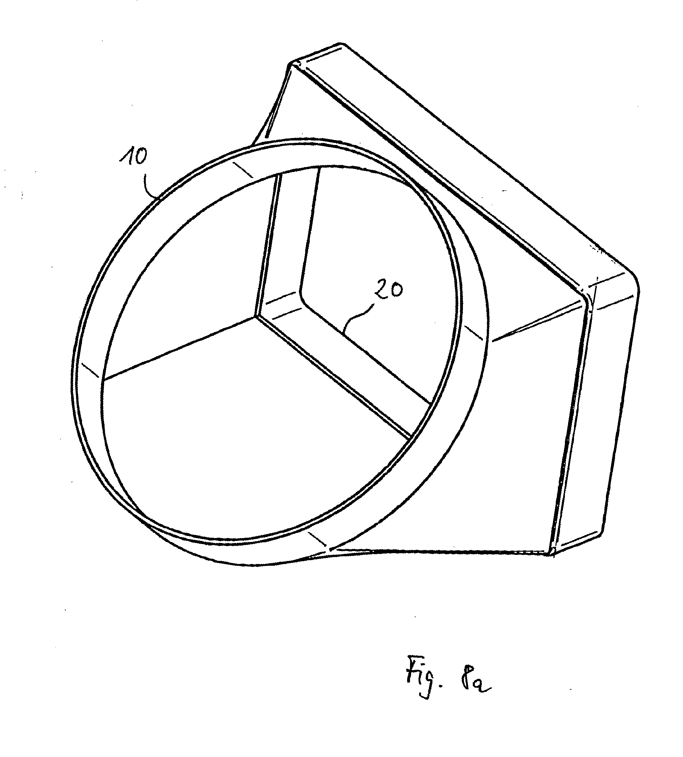

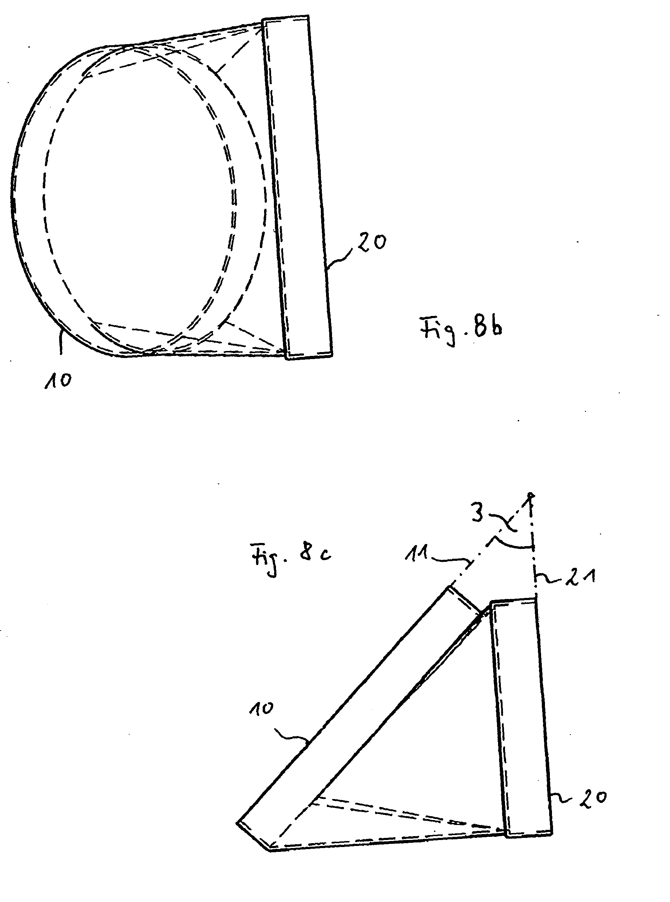

In den Figuren 8a, 8b und 8c ist eine dritte Ausführungsform eines Lüftungsinstallationselements gemäß der Erfindung in drei Ansichten dargestellt. Die erste Anschlussöffnung 10 weist einen kreisförmigen Querschnitt auf, während die zweite Anschlussöffnung 20 einen rechteckigen Querschnitt, wie bei den zuvor dargestellten Lüftungsinstallationselementen aufweist. Der Ablenkwinkel 3 wird auch hier durch die erste Ebene 11 und die zweite Ebene 21 eingeschlossen. Bevorzugt beträgt der Ablenkwinkel in dieser Ausführungsform etwa 45°. Das Lüftungsinstallationselement gemäß dieser Ausführungsform ist zur Umlenkung eines Luftstroms anwendbar, sowie als Übergangsstück zwischen einem rechteckigen Rohr und einem runden Rohr.

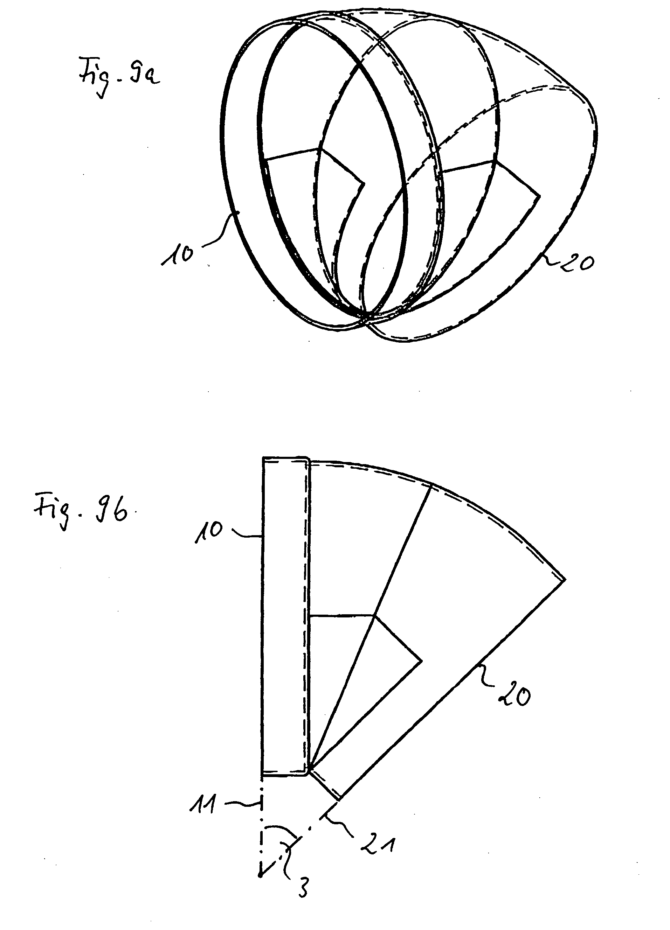

In den Figuren 9a und 9b ist eine vierte Ausführungsform eines Lüftungsinstallationselements gemäß der Erfindung in zwei schematischen Ansichten dargestellt. Die erste Anschlussöffnung 10 und die zweite Anschlussöffnung 20 weisen einen runden Querschnitt auf.

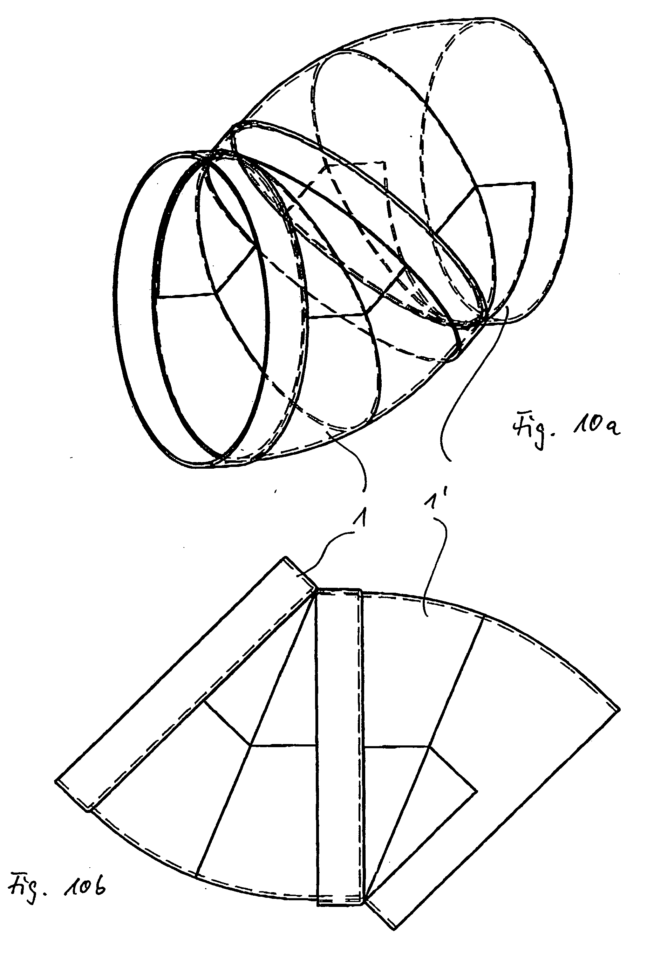

Die Figuren 10a und 10b zeigen einen Teil einer erfindungsgemäßen Lüftung mit zwei Lüftungsinstallationselementen 1, 1' gemäß Figuren 9a und 9b in zwei schematischen Ansichten. Ein Vorteil der dargestellten Kombination zweier Lüftungsinstallationselemente nach dieser Ausführungsform liegt darin, dass durch Verdrehen der Lüftungsinstallationselemente 1, 1' gegeneinander, eine Umlenkung des Luftstroms in jede beliebige Raumrichtung möglich ist, wobei der maximal erreichbare Winkel dem zweifachen Ablenkwinkel entspricht.

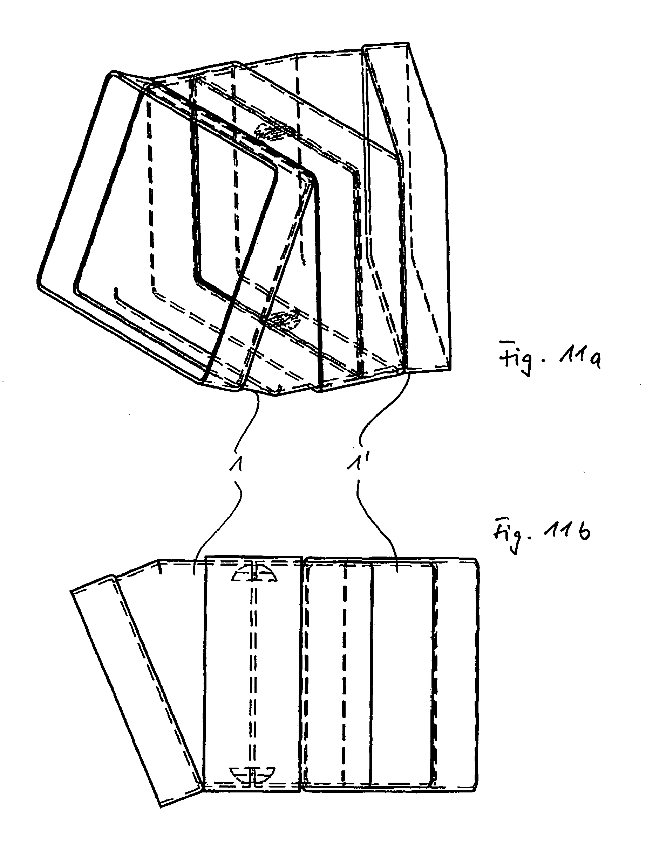

Die Figuren 11a und 11b zeigen einen Teil einer erfindungsgemäßen Lüftung mit einer Kombination der Lüftungsinstallationselemente 1, 1' gemäß Figuren 1 a und 1 b, sowie 5a und 5b. Die Ablenkung erfolgt nach dieser Kombination zunächst in einer ersten Raumrichtung und anschließend in einer zweiten Raumrichtung, senkrecht zur ersten Raumrichtung. Die erfindungsgemäßen Lüftungsinstallationselemente aller dargestellten Ausführungsformen lassen sich vorteilhafterweise beliebig kombinieren.

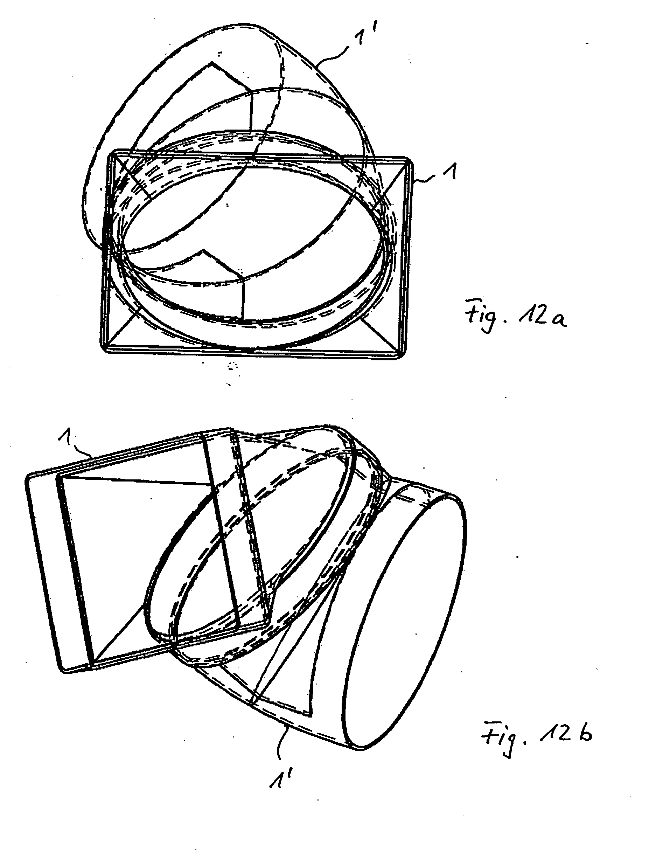

Die Figuren 12a und 12b zeigen einen Teil einer erfindungsgemäßen Lüftung mit einer Kombination der Lüftungsinstallationselemente 1 gemäß Figuren 8a und 8b mit Lüftungsinstallationselemente 1' gemäß Figuren 9a und 9b, in zwei schematischen Ansichten. Die Ablenkung nach dieser Kombination kann in jede beliebige Raumrichtung erfolgen. Das Lüftungsinstallationselement 1 stellt einen Übergang zwischen einem eckigen und einem runden Rohrquerschnitt dar.

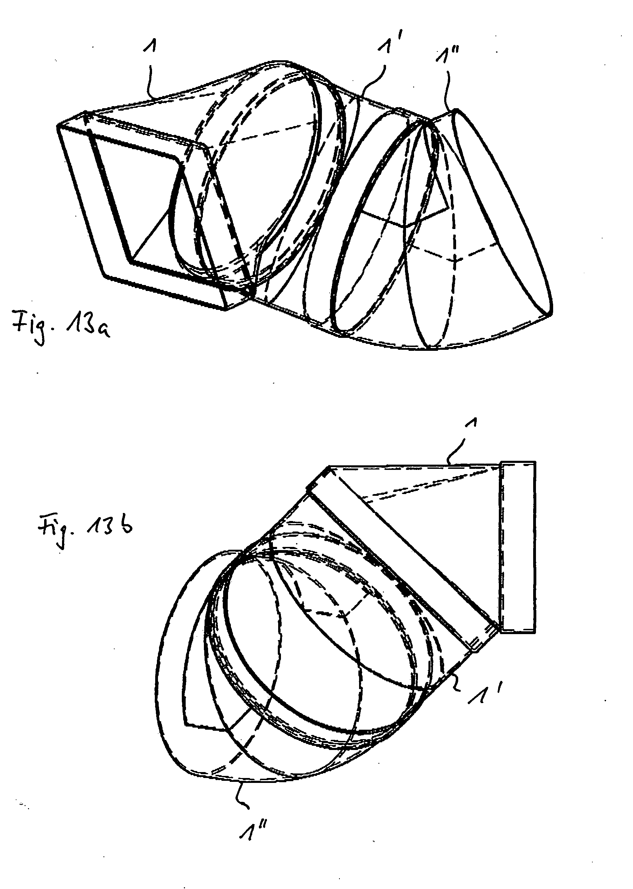

In den Figuren 13a und 13b ist die Kombination gemäß Figuren 12a und 12b mit einem mit einem weiteren Lüftungsinstallationselement 1" gemäß Figuren 9a und 9b in zwei schematischen Ansichten dargestellt, welche die Möglichkeit beliebiger Kombinationen der dargestellten Lüftungsinstallationselemente illustriert.

## Patentansprüche

1. Lüftungsinstallationselement (1) mit einem umschlossenen Innenraum (2), welcher über eine erste Anschlussöffnung (10) und über eine zweite Anschlussöffnung (20) mit weiteren Lüftungsinstallationselementen (1', 1", 1 "') oder mit sonstigen Elementen einer Lüftung verbindbar ist, **dadurch gekennzeichnet, dass** die erste Anschlussöffnung (10) eine erste Ebene (11) definiert, welche mit einer durch die zweite Anschlussöffnung (20) definierten zweiten Ebene (21) einen Ablenkwinkel (3) einschließt, wobei der Ablenkwinkel ein spitzer Winkel ist.

2. Lüftungsinstallationselement nach Anspruch 1, **dadurch gekennzeichnet, dass** ein ganzzahliges Vielfaches des Ablenkwinkels (3) einen rechten Winkel bildet.

3. Lüftungsinstallationselement nach einem der vorhergehenden Ansprüche, **dadurch gekennzeichnet, dass** die erste Anschlussöffnung (10) und/oder die zweite Anschlussöffnung (20) einen im Wesentlichen rechteckigen Querschnitt aufweist.

4. Lüftungsinstallationselement nach einem der vorhergehenden Ansprüche, **dadurch gekennzeichnet, dass** der Innenraum (2) zumindest teilweise von einer im Querschnitt im Wesentlichen rechteckigen und/oder kreisrunden Wandung umschlossen ist, wobei das Lüftungsinstallationselement (1) als Umlenkstück zwischen Elementen der Lüftung mit im Wesentlichen rechteckigen und/oder kreisrunden Querschnitt dient.

5. Lüftungsinstallationselement nach Anspruch 4, **dadurch gekennzeichnet, dass** Breitseiten (4) der Wandung um den Ablenkwinkel (3) gegenüber der Geraden (6) geknickt und/oder gebogen sind.

6. Lüftungsinstallationselement nach Anspruch 4, **dadurch gekennzeichnet, dass** Schmalseiten (5) der Wandung um den Ablenkwinkel (3) gegenüber der Geraden (6) geknickt und/oder gebogen sind.

7. Lüftungsinstallationselement nach einem der vorhergehenden Ansprüche, **dadurch gekennzeichnet, dass** die erste Anschlussöffnung (10) und/oder die zweite Anschlussöffnung (20) einen im Wesentlichen kreisförmigen Querschnitt aufweisen.

8. Lüftungsinstallationselement nach einem der vorhergehenden Ansprüche, **dadurch gekennzeichnet, dass** der Ablenkwinkel (3) im Wesentlichen 45° beträgt.

9. Lüftungsinstallationselement nach einem der Ansprüche 7 oder 8, **dadurch gekennzeichnet, dass** es als Übergangselement von einem im Wesentlichen kreisförmigen Querschnitt auf einen im Wesentlichen rechteckigen Querschnitt eines weiteren Lüftungsinstallationselements (1') oder sonstigen Elements einer Lüftung dient.

10. Lüftung, aufweisend eine Mehrzahl von Elementen sowie mindestens ein Lüftungsinstallationselement (1) nach einem der vorhergehenden Ansprüche, wobei das Lüftungsinstallationselement (1) als Umlenkstück oder als Übergangsstück oder als Teil eines Umlenkstücks oder Übergangsstücks dient.

11. Lüftung nach Anspruch 10, **dadurch gekennzeichnet, dass** eine Mehrzahl der Lüftungsinstallationselemente (1, 1'; 1", 1'") einen Bogen, einen Höhenversatz, eine Versperrung, einen Seitenversatz oder einen Teilwinkel bilden.
